# EUROPEAN PATENT APPLICATION

(11) **EP 1 607 667 A1**
(43) Date of publication of application: **21.12.2005**
(21) Application number: 05105325.4
(22) Date of filing: 16.06.2005
(51) Int. Cl.: F16L 11/12

(54) **Pressurized-gas coil**

(30) Priority: 18.06.2004 IT BO20040052 U
(71) Applicant: SPIRALFLEX S.r.l., 40011 Anzola dell'Emilia (IT)
(72) Inventor: Vescogni, Ermanno, 40133 Bologna (IT)
(74) Representative: Jorio, Paolo

(57) **Abstract**

A pressurized-gas coil is defined by at least two conduits (2) supplied, in use, with a pressurized gas, and by a single outer sheath (3) enclosing at least part of both conduits (2).

## Description

The present invention relates to a pressurized-gas coil.

More specifically, the present invention relates to a coil of a pneumatic compressed-air circuit normally used on trucks, to which the following description refers purely by way of example.

The coil normally comprises at least two conduits, each of which is coiled about its longitudinal axis and has two tubular fittings at its free ends for connection to the pneumatic compressed-air circuit.

A major drawback of known compressed-air coils of the type described above is the relative ease with which the conduits get tangled.

It is an object of the present invention to provide a pressurized-gas coil designed to eliminate the aforementioned drawback, and which is cheap and easy to produce.

According to the present invention, there is provided a pressurized-gas coil, as claimed in Claim 1.

A non-limiting embodiment of the present invention will be described by way of example with reference to the accompanying drawings, in which:
Figure 1 shows a schematic side view of a preferred embodiment of the pressurized-gas coil according to the present invention;
Figure 2 shows a schematic longitudinal section of a detail of the pressurized-gas coil in Figure 1.

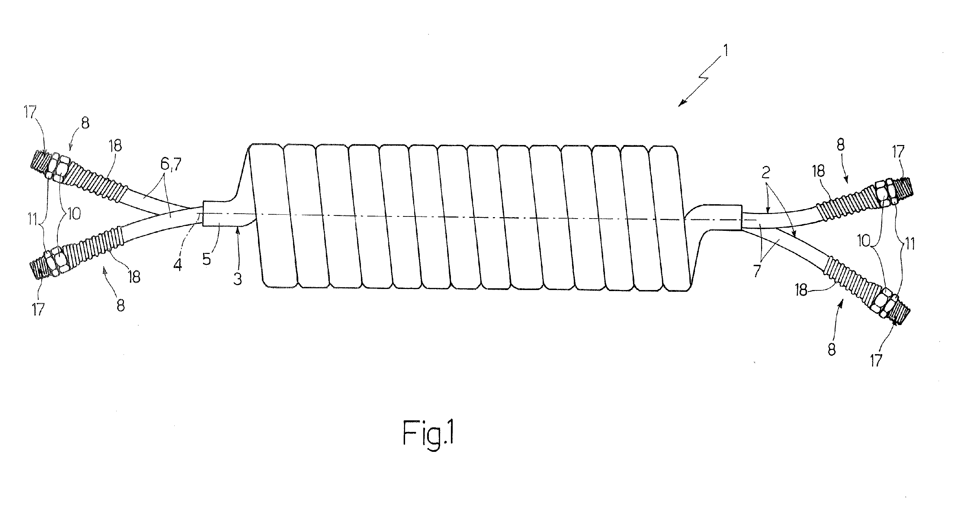

Number 1 in Figure 1 indicates as a whole a coil of a pneumatic compressed-air circuit (not shown) normally used on a truck (not shown).

In the example shown, coil 1 comprises two conduits 2 enclosed partly inside a single outer sheath 3 and wound about a longitudinal axis 4 of coil 1.

In a variation not shown, more than two conduits 2 may obviously be enclosed inside the same sheath 3.

In use, sheath 3 prevents tangling of conduits 2, and is defined, in the example shown, by a tubular cover fitted onto conduits 2. In a variation not shown, sheath 3 may obviously be formed by a strip wound about conduits 2.

Each conduit 2 comprises a pipe 6 having two end portions 7, which project outwards of sheath 3, and each of which has a pneumatic fitting 8 for connecting pipe 6 to the pneumatic circuit (not shown).

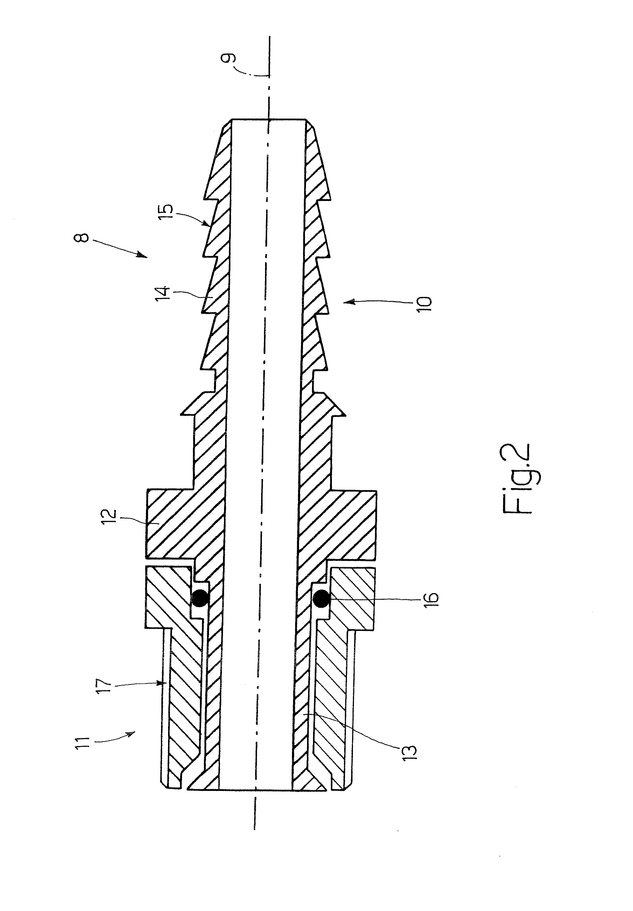

As shown in Figure 2, each fitting 8 has a longitudinal axis 9, and comprises a tubular first member 10 for connection to relative conduit 2; and a tubular second member 11 for connection to the pneumatic circuit (not shown).

Member 10 comprises a wide intermediate portion 12 between a substantially cylindrical, narrow portion 13 and a shank 14, which fits inside relative portion 7 and is bounded externally by a surface 15 which is substantially serrated in longitudinal section.

Member 11 is fitted onto portion 13 with the interposition of a sealing ring 16 coaxial with axis 9, is positioned substantially contacting portion 12, has a thread 17 on its outer surface, and is fitted in rotary and axially-fixed manner to portion 13 to rotate, with respect to portion 13, about axis 9.

Screwing/unscrewing fitting 8, therefore, does not result in rotation of conduit 2 as a whole, and each fitting 8 can be screwed/unscrewed independently of the other fittings 8.

Finally, a spring 18 is fitted to each end portion 7 to prevent excessive twisting of portion 7.

## Claims

1. A pressurized-gas coil comprising at least two conduits (2) supplied, in use, with a pressurized gas; and **characterized by** also comprising a single outer sheath (3) enclosing at least part of both said conduits (2) .

2. A coil as claimed in Claim 1, wherein each conduit (2) has two end portions (7) projecting outwards of said sheath (3) and each having a pneumatic fitting (8); each fitting (8) comprising a first tubular member (10) for connecting the fitting (8) to the relative end portion (7), and a second tubular member (11) fitted in rotary manner to the first tubular member (10).

3. A coil as claimed in Claim 2, wherein the second tubular member (11) is fitted in axially-fixed manner to the first tubular member (10).

4. A coil as claimed in Claim 2 or 3, wherein the second tubular member (11) is at least partly threaded externally.

5. A coil as claimed in any one of Claims 2 to 4, wherein the first tubular member (10) comprises a shank (14) fitted inside the relative said end portion (7); the shank (14) having a serrated outer surface (15).

6. A coil as claimed in any one of the foregoing Claims, wherein said sheath (3) comprises a strip wound about said conduits (2).

7. A coil as claimed in any one of Claims 1 to 5, wherein said sheath (3) comprises a tubular cover (5) fitted onto said conduits (2).
